# EUROPEAN PATENT APPLICATION

(11) **EP 4 546 177 A1**
(43) Date of publication of application: **30.04.2025**
(21) Application number: 23205926.1
(22) Date of filing: 25.10.2023
(51) Int. Cl.: G06F 21/31, G06F 40/00, G06N 3/02, H04L 9/40

(54) **SYSTEM AND METHOD FOR CROSS-PLATFORM RECENT USER-ACTIVITY BASED AUTHENTICATION**

(71) Applicant: THALES DIS CPL USA, INC., Austin, TX 78759 (US)
(72) Inventor: YAHYA, David, TORONTO, M4V2C1 (CA)
(74) Representative: Lotaut, Yacine Diaw

(57) **Abstract**

Provided is a system (100) and method (200) for cross-platform recent user-activity based authentication. The system collects (202) recent user-activity across two or more communication platforms (160, 170), and generates (214) user-knowledge events from the recent user-activity, generates (210) random questions concerning the user-knowledge events combined from the two or more communication platforms. The random questions test the user's knowledge of their recent user-activity. A genAPI (140) parses (220) the answered questions, queries (222) the database for an expected response to the answered questions, and compares (224) the expected response to the answers received to authenticate the user. Other embodiments are disclosed.

## Description

### TECHNICAL FIELD

The present invention relates generally to Identity and Access Management (IAM), and more particularly, to a system and method for secure authentication of a user by generative Artificial Intelligence (AI) support to generate random questions from recent user-activity across multiple communication platforms.

### BACKGROUND

Identity and Access Management (IAM) is the security discipline that enables the right users to access the right resources at the right time for the right reasons. It is a framework of policies and technologies to ensure that these users have the appropriate access to technology resources. An IAM administrator can centrally manage permissions to control which resources a user can access. Within the IAM ecosystem, authentication and authorization are two vital and separate information security processes that administrators use to protect systems and information. Authentication verifies the identity of a user or service, and authorization determines their access rights.

Authentication is the process of validating the identity of a registered user or process before enabling access to protected networks and systems. Many enterprise networks, e-commerce sites, and online communities require only a username and static password for login and access to personal and sensitive data. But, traditional authentication methods, relying only on static username-password combinations, often fall short in providing robust security measures and can be easily compromised. Various additional authentication methods have been proposed.

Multi-Factor Authentication (MFA) is one that has gained popularity in addressing these vulnerabilities. MFA is a layered approach to securing data and applications where a system requires a user to present a combination of two or more credentials to verify a user's identity for login. MFA increases security because even if one credential becomes compromised, unauthorized users will be unable to meet the second authentication. Existing MFA solutions predominantly employ static authentication factors, which can still be vulnerable to various attacks such as phishing, keylogging, and man-in-the-middle attacks.

Knowledge Based Authentication (KBA) is a security process that requires asking users for answers to personal information questions to authenticate their identity when accessing accounts or services. Users are required to answer questions that only the individual would know the answer to. The information from the question can come directly from the user, like a phone number, current address or answers to security questions they provide during registration, or the system can obtain the information from data service providers and other sources. KBA questions are usually static or dynamic. There are three types of KBA: Static KBA, Dynamic KBA, and Enhanced KBA.

Static KBA involves selecting a set of predetermined questions that users can choose from when setting up their KBA. These questions are often personal, referring to highly personalized experiences or preferences that would be difficult for an attacker to guess without directly knowing the user. Examples of static KBA questions include: What is your mother's maiden name? What was the name of your first pet? In what city were you born? These questions are typically selected during a user onboarding process; namely a registration step where these questions are presented, and the users answers are recorded for posterity. Later, when the user accesses the account, they are asked to provide the answers to those same questions.

Dynamic KBA is a form of adaptive authentication that generates questions based on information retrieved from various data sources providing user data tied to the user, such as public records, credit reports, or social media profiles. The system uses algorithms to select relevant, personalized questions only the user should know. Examples of dynamic KBA questions include: Which of the following addresses have you lived at in the past? What was the name of your elementary school? Which of these phone numbers have you previously used? The generation process for dynamic KBA questions typically involves data aggregation and analysis to create a set of potential questions.

Enhanced KBA uses both static and dynamic questions, as well as other methods, including biometrics like fingerprints or facial recognition technology. Enhanced KBA provides an additional layer of protection against unauthorized access by combining static and dynamic information. This type of KBA is often used when a high level of security is required, such as in financial transactions or when accessing sensitive systems
Other types of authentications have also been proposed, for example, behavior-based authentication and interactive-based authentication. The EURASIP Journal on Information Security (2022) 2022:6 (https://doi.org/10.1186/s13635-022-00132-x) presents a behavior-based authentication technology suitable for use on mobile devices. Typically, they are based on biometric data capturing and extracting user-specific behavioral patterns needed for the analysis of several modalities during user interactions with mobile devices. However, the performance of these systems significantly depends on the context, namely user's activity, for instance, standing, walking, running, and application in use.

These authentication approaches are all still vulnerable to exploit and attack and appear to become less effective over time. Online identity theft, data breaches, and cybersecurity threats and other nefarious practices are increasing worldwide with each posing their own unique security risks. As a result, there is a need for an innovative authentication solution that not only enhances security but also introduces a dynamic element to the process, for example, with emphasis on stronger user identity, better access controls including multi-factor authentication (MFA), and improved security posture.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments a system is provided for cross-platform recent user-activity based authentication. The system includes a user activity monitor, an App Service and a generative Artificial Intelligence (AI) Applications Programming Interface (genAPI). The user activity monitor collects recent user-activity across two or more communication platforms. The App Service is communicatively coupled to the user activity monitor to store in a database recent user-activity converted into a vector format. The a genAPI is communicatively coupled to the App Service, a database and an AI engine to generate user-knowledge events from the recent user-activity in vector format, and generate random questions from said user-knowledge events combined from the two or more communication platforms, wherein the random questions test the user's knowledge of their recent user-activity. The user authentication module requests said random questions from the genAPI, presents the random questions to, and receive answers from, a user as part of an authentication step, and transmit answered questions and the answers from the random questions to the genAPI. The genAPI by way of the App Service parses the answered questions, queries the database and AI Engine for an expected answer to the answered questions, compares the expected answer to the answers received from the user, and authenticates the user if the compare is within a probabilistic threshold. The step of collecting and processing occurs responsive to obtaining user consent for compliance with security and privacy rules and regulations according to a questionnaire policy. The system includes one or more processors and memory coupled to the one or more processors, wherein the memory includes one or more partitions and computer instructions which when executed by the one or more processors causes the one or more processors to perform these operations.

In some embodiments the one of the communication platforms is a professional workplace collaboration platform and the other is a non-professional social media platform, wherein, the professional workplace collaboration platform is one among team messaging, team chat, project messaging, boarding program, and business communication tool providing integrated Identity, Access and Management (IAM), and the non-professional social media platform is one among a social media app, a social network, a discussion forum, a content-sharing network, a blog or community network, a shopping network, and a content-hosting network,

In some embodiments the recent user-activity on the non-professional social media platform, is identified from updates to social media profile, pictures, texts, chats, storyboard, or marketplace, and, on the professional workplace collaboration platform, is identified from user logs of an authentication server implementing a protocol from one among Kerberos, RADIUS, LDAP, OAuth2 or SAML for verifying an identify and authorizing the user. The step of generating user-knowledge events includes determining a recency of user activity in view of the user logs, and said step of generating questions retrieves user-knowledge events from recent user activities occurring only while the user is simultaneously logged into the two or more communication platforms

In some embodiments the database is a NoSQL database that stores JSON objects containing entries for question content in accordance with questionnaire policy and enforcement thereof, and a list of precompiled questions.

In some embodiments the database is a NoSQL database and said vector is formatted to additionally include a first-time stamp establishing time and date of said capturing step for enforcing a recency of said recent user-activity based authentication; and
a second time stamp establishing time and date of content for enforcing a relevancy of random question content during said recency of said user-activity based authentication.

In some embodiments a method for cross-platform recent user-activity based authentication is provided. The method can include collecting recent user-activity across two or more communication platforms by way of a user activity monitor; storing recent user-activity converted into a vector format in a database by way of an App Service; generating user-knowledge events from the recent user-activity in vector format by way of a generative Artificial Intelligence (AI) Applications Programming Interface (genAPI); and generating random questions concerning the user-knowledge events combined from the two or more communication platforms by way of the genAPI, wherein the random questions test the user's knowledge of their recent user-activity. The method, by way of a user authentication module, performs steps of requesting said random questions from the genAPI; presenting the random questions to, and receiving answers from, the user as part of an authentication step; and transmitting answered questions and the answers from the random questions to the genAPI. The genAPI by way of the App Service parses the answered questions, queries the database for an expected answer to the answered questions, compares the expected answer to the answers received from the user, and authenticates the use if the compare is within a probabilistic threshold. The step of collecting and processing occurs responsive to obtaining user consent for compliance with security and privacy rules and regulations according to a questionnaire policy.

In some embodiments one of the communication platforms is a professional workplace collaboration platform and the other is a non-professional social media platform, wherein, the workplace collaboration platform is one among team messaging, team chat, project messaging, boarding program, and business communication tool providing integrated Identity, Access and Management (IAM), and the social media platform is one among a social media app, a social network, a discussion forum, a content-sharing network, a blog or community network, a shopping network, and a content-hosting network.

In some embodiments the recent user-activity on the non-professional social media platform, includes updates to social media profile, pictures, texts, chats, storyboard, or marketplace, and, on the professional workplace, is identified from user logs of an authentication server implementing a protocol from one among Kerberos, RADIUS, LDAP, OAuth2 or SAML for verifying an identify and authorizing the user,

In some embodiments the step of identifying user-knowledge events includes determining a recency of user activity in view of the user logs, and said step of generating random questions retrieves user-knowledge events from recent user activities occurring only while the user is simultaneously logged into the two or more communication platforms

In some embodiments the method includes logging said recent user activity in a natural format that is vectorized for storage as a vector in a database and suitable for use with Large Language Models (LLMs); and enforcing bounds on the storage and use of the vector in a random question presented to the user for authentication purposes in accordance with the questionnaire policy, wherein the bounds are one of a time limit, a privacy limit, a security limit or a content limit.

In some embodiments the method includes enforcing a recency of said user-activity based authentication by way of a first time stamp establishing time and date of said collecting step; and enforcing a relevancy of random question content during said recency of said user-activity based authentication by way of a second time stamp establishing time and date of content, wherein the database is a NoSQL database and said vector is formatted to additionally include said first time stamp and said second time stamp.

In some embodiments the questionnaire policy includes information relevant to said recent user-activity, and establishes limits on date, location, people, picture, text, comments, posts, tags, and storyboard information and events for enforcing relevancy and recency, and
wherein the questionnaire policy API includes an extent entry that limits a total number of social media platforms to combine when pulling content for the questionnaire.

In some embodiments the random questions additionally present as challenge a "Completely Automated Public Turing test to tell Computers and Humans Apart" (CAPTCHA) with content relevant to recent user-activity combined from the two or more communication platforms.

In some embodiments recent user event information is embedded as an attribute in an Access Token to extend authentication rules, and wherein the Access Token is one of a Security Assertion Markup Language (SAML) transaction or a JSON Web Token (JWT).

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG.** 1 depicts a system for secure authentication utilizing dynamic and generative question generation within an Identity and Access Management (IAM) ecosystem in accordance with some embodiments;
**FIG.** 2 depicts a method of secure authentication utilizing dynamic and generative question generation within the IAM ecosystem in accordance with some embodiments; and
**FIG.** 3 depicts an exemplary diagrammatic representation of a machine and hardware platform suitable for use to perform the methods in accordance with an embodiment.

Specific embodiments in this invention have been shown by way of example in the foregoing drawings and are hereinafter described in detail. The figures and written description are not intended to limit the scope of the inventive concepts in any manner.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

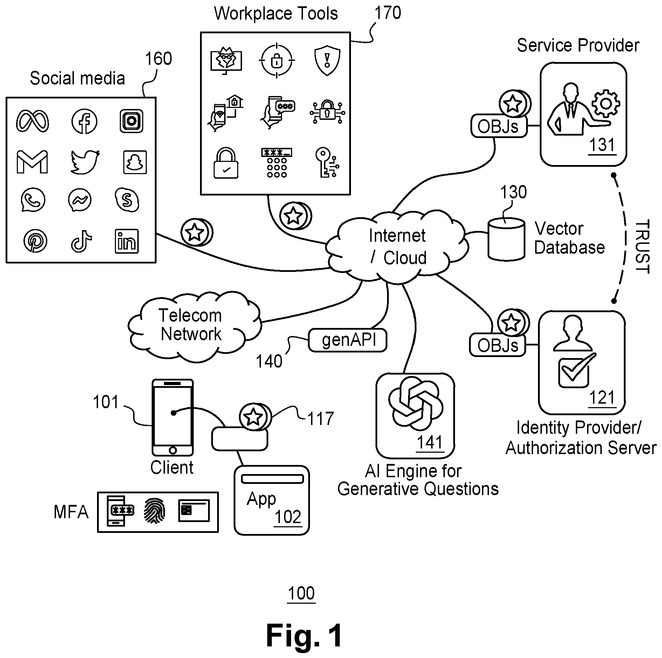

**FIG. 1** illustrates a system **100** for secure authentication utilizing dynamic and generative question generation within an Identity and Access Management (IAM) ecosystem. The system **100** comprises a Client **101,** an Artificial Intelligence (AI) engine **141,** a Service Provider **131** and an Identity Provider (IdP) **121** communicatively coupled over the Internet and/or a telecommunications network. Also included, in accordance with embodiments of the invention, is a generative Applications Programming Interface (API) **140** (genAPI), a Vector Database **130,** and one or more communication platforms, for example, social media applications **170** and workplace tools **160.** The Client **101** is a computational device such as a computer or mobile device communicatively connected to these components. It includes an operating system (OS) or browser for executing an Application (App) **102** as one example of a program that requires user authentication. It may be a native app executing on the OS or a web app through a browser.

In a generic IAM ecosystem the user is authenticated either directly by the Identity Provider **121** or indirectly through the Service Provider **131.** Traditional authentication methods, relying solely on static username-password combinations, often fall short in providing robust security measures and can be easily compromised. To address these vulnerabilities, Multi-Factor Authentication (MFA) has gained popularity by introducing additional authentication factors like one-time passwords or biometric data. However, existing MFA solutions predominantly employ static authentication factors, which can still be vulnerable to various attacks such as phishing, keylogging, and man-in-the-middle attacks. As a result, there is a pressing need for an innovative authentication solution that not only enhances security but also introduces a dynamic element to the process.

As will be described ahead in more detail, in accordance with the inventive aspects herein disclosed to improve upon the traditional authentication methods, app 102 generates random questions as part of the authentication process based on recent user-activity that only the user should know and be able to answer via dynamic authentication mechanisms. The random questions are generated by the genAPI 140 with support from the Artificial Intelligence (AI) engine **141,** database **130** and Service Provider **131.** Here, the random questions are generated directly from the user's recent activities across multiple communication platforms, including social media applications **170** and workplace tools **160.** In some arrangements the genAPI 140 is integrated with the App Service 212 such that it is also communicatively coupled directly to the database 130 and AI engine 140. The genAPI **140** provides interaction with, and access to components (Identity Provider **121,** Service Provider **131,** AI Engine **141**) within the IAM environment, and the exchange of information relevant to user-activity authentication.

In some embodiments the genAPI **140** is a RESTful API, which is an architectural style for an application program interface (API) that uses HTTP requests to access and use data. That data can be used to GET, PUT, POST, PATCH and DELETE command types, which refers to the reading, updating, creating and deleting of operations concerning resources. GET requests are used to retrieve data, and POST requests are used to create data (related to quorum and resources; also, to produce and consume the quorum services and data) with the REST API. REST is a logical choice for building APIs that allow users to connect to, manage and interact with cloud services flexibly in a distributed environment, and allows cloud consumers to expose and organize access to HSM based web services.

The Identity Provider **121,** Service Provider **131,** Client **101,** and Application **102** exchange the access token objects (OBJs) **117** across the network **300.** These objects can be in the format of a Java Web Token (JWT) or JSON Web Token (JOT). Usually this consists of three parts: a header, a payload body and signature. Inside the payload are claim assertion attributes, a sub-property attribute that is a unique identifier for a user, an audience attribute identifying who is the intended recipient to use ID Token, an issuer attribute which is the identify provider who created the token, and other pieces about the user. In certain arrangements, the access tokens **117** provide complementary and supplement with the genAPI **140** across system components. The access token **117** contains information, not only related to standard authentication process, but can also include a state of availability of the questions in real-time, during authentication, to ensure, and check, that questions are available for presentation to the user on receipt of the access token, and furthermore, in accordance with a questionnaire policy. As one example, recent user event information is embedded as an attribute in the Access Token **117** to extend authentication rules. In some arrangements, the Access Token is a Security Assertion Markup Language (SAML) transaction or a JSON Web Token (JWT).

The questionnaire policy sets bounds for generating user-knowledge events from recent user-activity and enforces a relevancy and a recency of user-knowledge events across the multiple communication platforms when generating the random questions. As one example limitation, the questionnaire policy identifies whether user consent has been obtained to comply with security and privacy rules and regulations, in order to permit the collecting of user-activity information and user-knowledge events associated therewith for generating the random questions. In another example, it sets a depth limit to the number of communication platforms accessible for collecting user activity from which to pull questions. In this way, the access token **117** is a highly dynamic responding and reporting agent for authentication purposes.

The Identity Provider **121** (IdP) is a service that creates, stores and manages digital identities. It provides the user or their internet-connected device authentication with a single set of login credentials. This ensures to other entities that the user is who they claim to be; it supports assertion message types: authentication, attribution and authorization. In other arrangements, the Identity Provider **121** may even authenticate the client **101** and/or Application **102.** The Identity Provider **121** can communicate with other entities and other web service providers via Security Assertion Markup Language (SAML), or data formats like Open ID Connect (OIDC) or Open Authorization (Oauth2). Oauth2 allows users to grant websites or applications access to their information on other websites but without giving them the passwords.

As shown, a trust relationship is a pre-requisite between the Identity Provider (IdP) **121** and Service Provider (SP) **131.** This trust is established by an enrollment and/or registration process, whereby these entities are configured to exchange, or are directly provided with, metadata. This "trust" explains in part how the IdP and SP are "integrated" together. And, depending on various configurations, an exchange of metadata, whereby each receives certificates and log information, defines the extent to which the entities are "integrated". Metadata contain various information like endpoints and supported services, but also public keys. These keys are used to sign messages between the two entities. For example, when the SP send messages to the IdP, the SP signs with its private key and the IdP verifies with the public key in the SP metadata. And vice versa, When the IdP sends data, it signs it with its private key and the SP verifies it with the public key in the IdP metadata. This arrangement applies similarly when the SP interacts with a 3^{rd} party authorization server. This way each entity can trust that the message came from the expected sender.

The App **102** may be communicatively coupled to components and network devices in the communication environment **100** via an online or offline mode. In this embodiment, the app **102** by way of the Client **101** also provides and accepts multiple factor authentication (MFA), secure one-time passcode (OTP) generation, as well as single-tap push or pull authentication. Multi-factor Authentication (MFA) is an authentication method that requires the user to provide two or more verification factors to gain access to a resource. With MFA, a user is granted access only after successfully presenting several separate pieces of evidence to an authentication mechanism - usually from at least two of the following three categories: knowledge-something one knows such as a password or personal identification number (PIN), possession--something one has such as a cryptographic identification device, smart card or secure token, and inherence--biometrics such as fingerprints, iris, face, palm print, etc. The goal of MFA is to create a layered defense and make it more difficult for an unauthorized person to access a target such as a physical location, computing device, network or database.

The Client **101,** Identity Provider **121** and Service Provider **131** each include one or more processors and memory coupled to the one or more processors, wherein the memory includes computer instructions which when executed by the one or more processors causes the one or more processors to perform the method steps herein described. They may be connected over the network to other machines via a network communication device interface. In a networked deployment, they may operate in the capacity of a standalone mobile device, a client user machine in server-client user network environment, or as a peer machine in a peer-to-peer, or distributed, network environment.

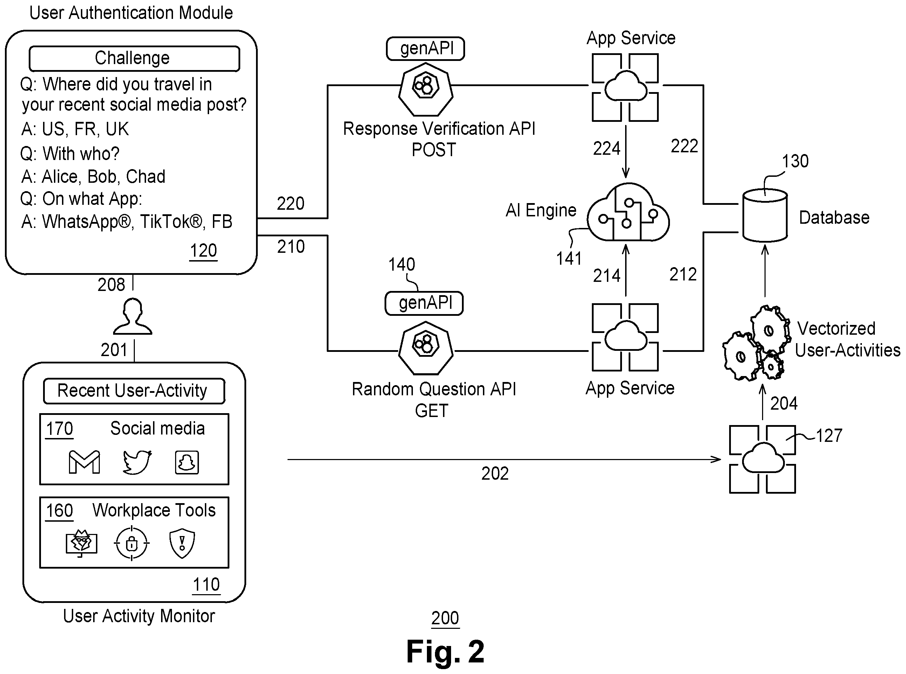

Referring to **FIG. 2****,** a series of steps for a method 200 of secure authentication utilizing dynamic and generative question generation is shown. For practicing the method steps, an exemplary architecture for combinational, cross-platform, recent user-activity based authentication with emphasis on communication interfaces is illustrated. Other architectures are contemplated. When describing the steps of the method **200,** reference will be made to the components previously shown in **FIG. 1** for example, App Service **127,** the database **130,** and genAPI **140.** The user activity monitor **110** and user authentication module **120** can be independent programs, or integrated modules included with the App **102** shown in **FIG. 1****.** More or less than the number of components or steps shown may be used in practice or when implemented in different embodiments when referring to the method steps.

The method **200** can start at step **201** where a user is interacting with one or more communication platforms, for example, a professional workplace collaboration platform 160 and a non-professional social media platform 170. As an example, non-professional social media platform 170 can be one among a social media app, a social network, a discussion forum, a content-sharing network, a blog or community network, a shopping network, and a content-hosting network. As an example, the professional workplace collaboration platform 160 can be one among team messaging, team chat, project messaging, boarding program, and business communication tool providing integrated Identity, Access and Management (IAM).

At step **202,** the user activity monitor **110** collects recent user-activity across the professional workplace collaboration platform 160 and a non-professional social media platform 170. User activity comprises those actions by the user when interacting and interfacing with the one or more communications platform. The actions may be related to captured human interaction on the App **102** and/or with the Client device **101,** for example, audio, video, or text when using a respective communication platform. As one example, recent user-activity on the non-professional social media platform **170** is detected by identifying updates to social media profile, pictures, texts, chats, storyboard, or marketplace. Recent user-activity can be identified similarly when the user is interacting with workplace collaboration tools **160.** As one example, this can include team chat interactions, updates to work projects, accepting work calendar events, attending on-line work meetings, and so on. As another example, recent user-activity can be identified from user logs of an authentication server implementing a protocol from one among Kerberos, RADIUS, LDAP, OAuth2 or SAML for verifying an identify and authorizing the user. This allows for continuous activity monitoring and detecting log in events, network activity, and resource access requests to quality as user-activity. In some embodiments, the user activity monitor **110** identifies user-knowledge events includes determining a recency of user activity in view of the user logs, and said step of generating random questions retrieves user-knowledge events from recent user activities occurring only while the user is simultaneously logged into the two or more communication platforms

User actions and activities can also be associated with device events occurring in conjunction with the user's interaction on the communication platform. For example, user activity signals include information related to user interactions, system events, and security events. These system, device and security events, although independent from user-activity, can be used to embellish user-knowledge events and mental recollection in generating the random questions. Examples include, detecting a dropping or shaking of the phone during texting, detecting whether the user is moving or in a car while conversing, detecting a location of the user via GPS, or detecting other people's voices and alerting sounds while interacting with a communication platform. The device events may be referenced in conjunction with user-activity when the AI engine generates user-knowledge events from recent user-activity and recent device-activity.

At step **204** the App Service **127,** by way of a conversion utility, converts the recent user-activity into a vector format and at step **206** stores it in the database **130.** This database serves as a repository for the user's behavior patterns, preferences, and contextual information. In one arrangement, the Vector Database securely stores the user's recent activities in plain text format, thereby allowing for comprehensive analysis of user behavior patterns and preferences. The plain text format preserves the original data while ensuring efficient processing. This valuable insight enables a deep understanding of the user's unique characteristics, facilitating the generation of contextually relevant authentication challenges. The ability to analyze and utilize this data enhances the accuracy and effectiveness of the authentication process. By storing the activities in a vector format, the database enables efficient analysis and retrieval of user-specific information during the authentication process. Access to the Vector Database 130 is also strictly controlled, and appropriate encryption techniques are employed to protect the data at rest and in transit. It adheres to industry-standard security practices, including role-based access control, secure API endpoints, and secure communication protocols, to safeguard user data and prevent unauthorized access.

Briefly, the term "vectorization" means the conversion of an user-activity event, device event, security event, execution trace, event sequence, user interaction step, or other user, system or environmental event to a numeric vector for serving as an input pattern into machine learning, or for classification purposes. Vectorization is also extensible to include "event embeddings" which are a type of distance metric representations that allows events with similar activities/applications/uses to have a similar representation. As an example, a vectorization of user interaction steps for a similar purpose may include event embeddings associated with those steps, such that a vector produced by a first sequence of user steps to perform a device task, are closest in a distance measure (e.g. Euclidean, Hamming, Manhattan, L1 norm, L2 norm, log, exp, etc.) to similar vectorized user steps and vectorized events. Although not directly equivalent, it shares similarities with "word embeddings" used for natural language processing. A word embedding is a learned representation for text where words that have the same meaning have a similar numeric representation.

In another arrangement, implementation of a Shared Signals Framework (SSF), under development by the OpenID Foundation, is contemplated as a means to securely share security events and signals between related systems. The SSF facilitates the collection of user activity signals from various sources, ensuring a comprehensive understanding of the user's behavior across multiple platforms and services. By integrating the SSF into the authentication process, user activity signals can be collected and stored in the secure vector database. These dynamic signals serve as a rich source of information for the generation of random questions or generative tokens for authentication. By blending the collection of user activities with the SSF, the authentication process becomes adaptable and responsive to the user's changing behavior. Each authentication instance generates a unique and contextually relevant question or generative token, creating a dynamic authentication experience that is difficult for malicious actors to replicate. Integration of the Shared Signals Framework and the dynamic generation of random questions or generative tokens addresses the limitations of traditional authentication methods by harnessing the power of dynamic user behavior analysis and secure signal sharing. It ensures robust security measures while providing an intuitive and user-friendly authentication experience.

While the user is engaged with the one or more communication platforms (**160, 170**), and while recent user-activities are continuously being collected as described above, the user may simultaneously open another program or application that requires authorization. This part of the method **200** is shown at step **208,** where the user is to be authenticated by User Authentication Module **120,** which requests random questions from the App Service (127). These random questions are presented to the user as illustrated on the completion of steps 210 to 222.

At step **210,** the Module **120** presents a request to the Random Question API component of the genAPI **140** for one or more random questions related to recent user activity. The Random Question (or Generative Token Generation API) facilitates the generation of contextually relevant questions or generative tokens based on the user's recent activities stored in the Vector Database **130.** Here, it is in the form a GET command to the genAPI **140** which submits the user's response to the GET endpoint. This API component supports advanced algorithms, such as machine learning models or language models, to dynamically generate authentication challenges unique to each user. Notably, each authentication instance prompts the user with a series of questions or generative tokens that are tailored to their specific activities, thereby creating a personalized and dynamic authentication challenge. The dynamic generation of questions or generative tokens enhances security by introducing an additional layer of verification that is difficult for malicious actors to replicate.

At step **212,** responsive to the GET command, the App Service **127** inquires the database **130** for recent user-activity, which is stored vector format. In some configurations, the database **130** references an AI similarity library that allows the App Service **127** to quickly search for word embeddings of the vectorized user-activity events that are similar to each other. It solves limitations of traditional query search engines that are optimized for hash-based searches and provides more scalable similarity search functions.

At step **214,** the App Service **127** then prepares and passes the word embeddings of the vector for recent user-activity to the AI Engine **141.** There is an optional step to specify the machine learning models or language model used to dynamically generate authentication challenges unique to each user in view of user-knowledge events in the form of random questions. It requests a generation of random questions based on the user's recent activities. The genAPI request can additionally include parameters to formulate an extent of the random question content generated according to the questionnaire policy. In some embodiments, the AI Engine **141** leverages a Chat based Generative Pre-Trained Transformer (GPT) model for such purpose. Accordingly, genAPI **140** by way of interaction to the App Service **127,** AI Engine **140,** and database **130** through steps **210-214** effectively generates user-knowledge events from the recent user-activity in vector format as described above, and generates random questions concerning the user-knowledge events, which can be derived from the word embeddings of the vectors, combined from the professional workplace collaboration platform (160) and non-professional social media platform (170). The resulting random questions or generative tokens are designed to test and challenge the user's knowledge or recognition of their recent activities on these platforms.

The User Authentication Module **120** presents the random questions to the user at step **208.** The questions may be opened or closed. It presents the random questions to, and receive answers from, the user as part of the authentication step. The questions are generated to combine, and mix in, user activities that only the user should know from their interactions across the platforms. This is premised on the observation that a user is usually concurrently active in a professional and non-professional environment, while online for both. For example, in a same week, the same user is one platform submitting a "like" a friend's post, while on a call with their cousin on another app, and also emailing their manager at work, or replying to a thread on yet a different chat tool. The questions are designed to pull recent user activity content from the multiple platforms to form the random questions. In some embodiments, the random questions additionally present as challenge a "Completely Automated Public Turing test to tell Computers and Humans Apart" (CAPTCHA) with content relevant to recent user-activity combined from the two or more communication platforms (160, 170)

The genAPI **141** (reinforced by AI engine **140** where necessary) reads all these activities and automatically generate a unique token challenge as a question: "Who did you call yesterday on WhatsApp?" with answer options of Joe/Mike/Mother. Or, "What social media platform did you use yesterday at 8pm?" with answer options of Facebook^{®}/Instagram^{®}/LinkedIn^{®} are presented. User activities may be based on other factors such as GPS location and the challenge would be as follows: "Did you go out yesterday morning to buy a coffee on Yonge Street?" Yes/No. Or the combination of 2: "Did you go out yesterday morning to buy a coffee on Yonge Street and open Instagram?" Yes/No. If for some reason the user does not remember a specific activity, they can move on to the next challenge/question. The user decides which of the random questions to answer.

At step **220,** the User Authentication Module **120** presents the answered questions and corresponding answers to the Response Verification API component of the genAPI **140.** The set of random questions presented to the user that they decide to answer, and respond with answers, are called answered questions. The Response Verification API receives and analyzes the user's response (answered questions) to the generated question (or generative token). Here, they are prepared in the form of a **POST** command, which then submits the user's response (answers along with the answered questions) to the POST endpoint. This API leverages computational techniques, including the integration of language models like ChatGPT, to compare the user's response with the expected response based on their activity signals. The **POST** command transmits answered questions and the answers from the random questions to the App Service **127,** which parses the request and extracts the relevant data. Again, in some arrangements genAPI **140** is integrated with the App Service **212** such that it is also communicatively coupled directly to the database **130** and AI engine **140** to perform such tasks.

At step **222,** Responsive to the POST command, the App Service **127** queries the vector database **130** using the extracted relevant data to retrieve relevant user activity data associated with the user's response (answered questions and corresponding answers), which is stored vector format. The Response Verification component of the genAPI **140,** by way of the App Service **127,** database **130** and optional AI Engine **141,** performs a comprehensive analysis of the user's response (i.e., corresponding answers to asked question), taking into account factors such as semantic similarity, contextual relevance, and behavioral patterns to determine the authenticity of the user's response. By leveraging advanced algorithms, it verifies the authenticity of the user's response to the answered questions, in view of the answer, recent user activity, and user knowledge events, and determines whether the authentication should be granted or denied.

In one arrangement, the Response Verification component of the genAPI 140 can be deployed on the Microsoft Azure ^{®} cloud platform, leveraging its robust infrastructure and services. Azure^{®} App Service provides a serverless architecture that ensures scalability, high availability, and efficient resource utilization. It may also leverage Azure^{®} Blob Storage to securely store the Vector Database **130,** enabling efficient storage and retrieval of user activity data. Azure^{®} Functions, a serverless compute service, are utilized to implement the APIs for generating random questions and verifying user responses. Azure Functions provide an event-driven, scalable approach to handle API requests and execute the necessary computations

At step **224,** the App Service **127** then prepares and passes the word embeddings of the asked questions to the AI Engine **141** for generating an expected answer. This is similar to step **214,** but here, the word embeddings are associated with the answered questions for generating an expected answer, whereas in step **214,** the word embeddings were associated with the vector for recent user-activity for generating random questions. Similarly, this is an optional step to specify the machine learning models or language model used to dynamically generate expected answers in the form of word embeddings unique to the user-knowledge events associated with the asked question. Accordingly, genAPI **140** by way of interaction to the App Service **127,** AI Engine **140,** and database **130** through steps **220-224** effectively generates user-knowledge events from the answered questions, and generates expected answers for these user-knowledge events similarly derived from the word embeddings.

This is because the Vector Database **130** is pre-processed using algorithms, such as TF-IDF (Term Frequency-Inverse Document Frequency) or Word2Vec, to transform the plain text activities into a vector representation. This vectorization enables efficient analysis and retrieval of user-specific information during the authentication process. Additionally, the implementation utilizes language models like ChatGPT, which are trained on large-scale text data, can generate the expected answer based on the user's activity data. These language models employ natural language understanding techniques to analyze the user's response and determine its authenticity.

At this point, by way of steps **220-224,** the genAPI **140** by way of the App Service **127,** database **130** and AI Engine **141** has generated an expected answer to the answered questions. It now compares the expected answer to the answers received from the user, and authenticates the user if the compare is within a probabilistic threshold. The genAPI **140** returns the authentication results in the form of a JSON object. The User Authentication Module **120** queries the genAPI 140 for this object which indicates whether the user is authenticated or not, and any relevant error messages.

The Client **101,** Identity Provider **121** and License Server **131** each include one or more processors and memory coupled to the one or more processors, wherein the memory includes computer instructions which when executed by the one or more processors causes the one or more processors to perform the method steps. They may be connected over the network to other machines via a network communication device interface

### Other Embodiments:

In some embodiments the database 130 is a NoSQL database that stores JSON objects containing entries for question content in accordance with questionnaire policy and enforcement thereof, and a list of precompiled questions. Within the NoSQL database the
vector is formatted to additionally include a first-time stamp establishing time and date of said capturing step for enforcing a recency of said recent user-activity based authentication, and a second time stamp establishing time and date of content for enforcing a relevancy of random question content during said recency of said user-activity based authentication.

In some embodiments, the genAPI 140 by way of the App Service 127, database 130 and AI Engine 141 logs the recent user activity in a natural format that is vectorized for storage as a vector in a database and suitable for use with Large Language Models (LLMs) and enforces bounds on the storage and use of the vector in a random question presented to the user for authentication purposes in accordance with the questionnaire policy. The bounds can be one of a time limit, a privacy limit, a security limit or a content limit.

In some embodiments the questionnaire policy includes information relevant to the recent user-activity, and establishes limits on date, location, people, picture, text, comments, posts, tags, and storyboard information and events for enforcing relevancy and recency. The questionnaire policy API can also include an extent entry that limits a total number of social media platforms to combine when pulling content for the questionnaire.

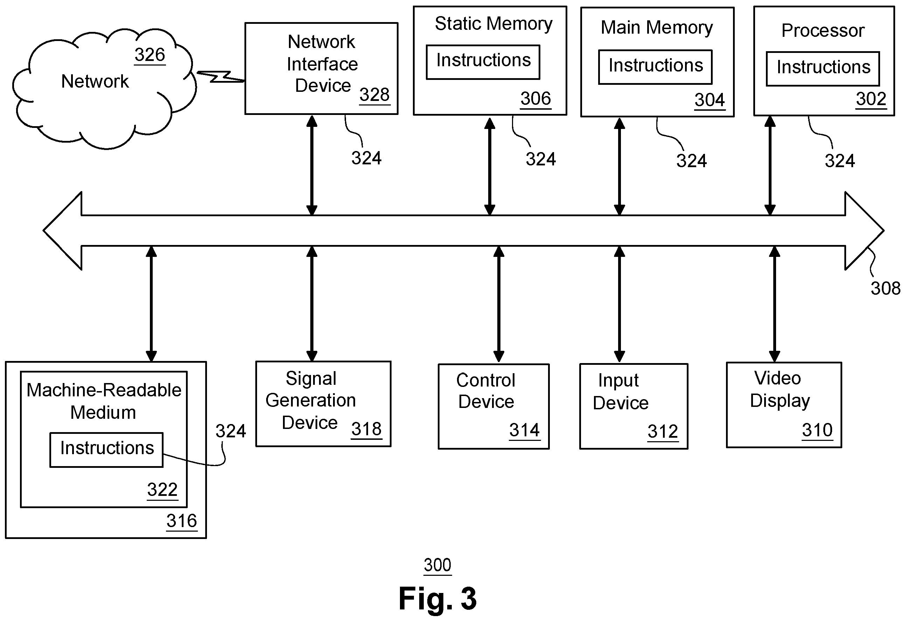

**FIG. 3** depicts an exemplary diagrammatic representation of a machine 300 and hardware platform suitable for use to perform the methods and steps exemplified in, and shown by components, of **FIGS 1-2** in accordance with various embodiments. This includes Client **101,** genAPI **140** , AI Engine **141,** App Service **127,** Service Provider **131,** Identity Provider **121,** and AI Engine **140** and the communication platforms **160/170.** For example, the method **200** can be performed by a hardware processor of the machine 300 executing computer program code instructions from an electronic memory to execute at least the method steps **201-224.** At least one a hardware processor of machine 300 can execute computer program code instructions from an electronic memory to execute processes of at least one service associated with method 200.

The machine 300 is shown in the form of a computer system 300, within which a set of instructions, when executed, may cause the machine to perform any one or more of the methodologies discussed above. In some embodiments, the machine operates as a standalone device, such as a computer, laptop, mobile device, remote control, or display. In some embodiments, the machine may be connected over the network to other machines. In a networked deployment, the machine may operate in the capacity of a server or a client user machine in server-client user network environment, or as a peer machine in a peer-to-peer, or distributed, network environment.

The machine may comprise a server computer, a client user computer, a personal computer (PC), a tablet PC, a laptop computer, a desktop computer, a mobile device, a cell phone, a control system, a network router, switch or bridge, or any machine capable of executing a set of instructions (sequential or otherwise) that specify actions to be taken by that machine. It will be understood that a device of the present disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system 300 may include a processor 302 (e.g., a central processing unit (CPU), a graphics processing unit (GPU, or both), a main memory 304 and a static memory 306, which communicate with each other via a bus 308. The computer system 300 may further include a video display unit 310 (e.g., a liquid crystal display or LCD), a flat panel, a solid-state display, or a cathode ray tube (CRT)). The computer system 300 may include an input device 312 (e.g., a keyboard, touchless sensing unit 110), a cursor control device 314 (e.g., a mouse, touchless sensing unit 110), a disk drive unit 316, a signal generation device 318 (e.g., a speaker or remote control) and a network interface device 320.

The disk drive unit 316 may include a machine-readable medium 322 on which is stored one or more sets of instructions (e.g., software 324) embodying any one or more of the methodologies or functions described herein, including those methods illustrated above. The instructions 324 may also reside, completely or at least partially, within the main memory 304, the static memory 306, and/or within the processor 302 during execution thereof by the computer system 300. The main memory 304 and the processor 302 also may constitute machine-readable media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable medium 322 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

The term "machine-readable medium" shall accordingly be taken to include, but not be limited to: solid-state memories such as a memory card or other package that houses one or more read-only (non-volatile) memories, random access memories, or other re-writable (volatile) memories; magneto-optical or optical medium such as a disk or tape; and carrier wave signals such as a signal embodying computer instructions in a transmission medium; and/or a digital file attachment to e-mail or other self-contained information archive or set of archives is considered a distribution medium equivalent to a tangible storage medium. Accordingly, the disclosure is considered to include any one or more of a machine-readable medium or a distribution medium, as listed herein and including art-recognized equivalents and successor media, in which the software implementations herein are stored.

In the above-description of various embodiments of the present disclosure, aspects of the present disclosure may be illustrated and described herein in any of a number of patentable classes or contexts including any new and useful process, machine, manufacture, or composition of matter, or any new and useful improvement thereof. Accordingly, aspects of the present disclosure may be implemented in entirely hardware, entirely software (including firmware, resident software, microcode, etc.) or combining software and hardware implementation that may all generally be referred to herein as a "circuit," "module," "component," or "system." Furthermore, aspects of the present disclosure may take the form of a computer program product comprising one or more computer readable media having computer readable program code embodied thereon.

Any combination of one or more computer readable media may be used. The computer readable media may be a computer readable signal medium or a computer readable storage medium. A computer readable storage medium may be, for example, but not limited to, an electronic, magnetic, optical, electromagnetic, or semiconductor system, apparatus, or device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable signal medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Scala, Smalltalk, Scheme, Go, C++, C#, VB.NET, Python or the like, conventional procedural programming languages, such as the "C" programming language, Perl, PHP, dynamic programming languages such as Python, Ruby and Groovy, or other programming languages. The program code may execute entirely on the user's computer, partly on the user's computer, as a stand-alone software package, partly on the user's computer and partly on a remote computer, entirely on the remote computer or server, or within the Cloud or other computer network. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS), Platform as a Service (PaaS) for connecting mobile apps to cloud based services, and Security as a Service (SECaas).

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A method (200) for cross-platform recent user-activity based authentication, the method comprising:
collecting (202) recent user-activity across two or more communication platforms (160, 170) by way of a user activity monitor (110);
storing recent user-activity converted (204) into a vector format in a database (130) by way of an App Service (127);
generating (214) user-knowledge events from the recent user-activity in vector format by way of a generative Artificial Intelligence (AI) Applications Programming Interface (genAPI) (140);
generating (210) random questions concerning the user-knowledge events combined from the two or more communication platforms by way of the genAPI, wherein the random questions test the user's knowledge of their recent user-activity; and,
by way of a user authentication module (120):
requesting said random questions from the genAPI (140);
presenting (208) the random questions to, and receiving answers from, the user as part of an authentication step;
transmitting (220) answered questions and the answers from the random questions to the genAPI (140),
wherein the genAPI (140) by way of the App Service (127) parses the answered questions, queries (222) the database for an expected answer to the answered questions, compares (224) the expected answer to the answers received from the user, and authenticates the use if the compare is within a probabilistic threshold,
wherein said step of collecting and processing only occurs responsive to obtaining user consent for compliance with security and privacy rules and regulations according to a questionnaire policy.

2. The method of claim 1, wherein one of the communication platforms is a professional workplace collaboration platform (170) and the other is a non-professional social media platform (160), wherein,
the workplace collaboration platform (170) is one among team messaging, team chat, project messaging, boarding program, and business communication tool providing integrated Identity, Access and Management (IAM), and
the social media platform (160) is one among a social media app, a social network, a discussion forum, a content-sharing network, a blog or community network, a shopping network, and a content-hosting network.

3. The method of claim 2,
wherein recent user-activity:
on the non-professional social media platform (160), includes updates to social media profile, pictures, texts, chats, storyboard, or marketplace, and
on the professional workplace (170), is identified from user logs of an authentication server implementing a protocol from one among Kerberos, RADIUS, LDAP, OAuth2 or SAML for verifying an identify and authorizing the user,
wherein said step of identifying user-knowledge events includes determining a recency of user activity in view of the user logs, and said step of generating random questions retrieves user-knowledge events from recent user activities occurring only while the user is simultaneously logged into the two or more communication platforms

4. The method of claim 1, further comprising:
logging said recent user activity in a natural format that is vectorized for storage as a vector in a database and suitable for use with Large Language Models (LLMs); and
enforcing bounds on the storage and use of the vector in a random question presented to the user for authentication purposes in accordance with the questionnaire policy,
wherein the bounds are one of a time limit, a privacy limit, a security limit or a content limit.

5. The method of claim 4, further comprising:
enforcing a recency of said user-activity based authentication by way of a first time stamp establishing time and date of said collecting step; and
enforcing a relevancy of random question content during said recency of said user-activity based authentication by way of a second time stamp establishing time and date of content,
wherein the database is a NoSQL database and said vector is formatted to additionally include said first time stamp and said second time stamp.

6. The method of claim 4,
wherein the questionnaire policy includes information relevant to said recent user-activity, and establishes limits on date, location, people, picture, text, comments, posts, tags, and storyboard information and events for enforcing relevancy and recency, and
wherein the questionnaire policy API includes an extent entry that limits a total number of social media platforms to combine when pulling content for the questionnaire.

7. The method of claim 1, wherein the random questions additionally present as challenge a "Completely Automated Public Turing test to tell Computers and Humans Apart" (CAPTCHA) with content relevant to recent user-activity combined from the two or more communication platforms.

8. The method of claim 1, wherein recent user event information is embedded as an attribute in an Access Token to extend authentication rules, and wherein the Access Token is one of a Security Assertion Markup Language (SAML) transaction or a JSON Web Token (JWT).

9. A system (100) for cross-platform recent user-activity based authentication, the system comprising:
one or more processors and memory coupled to the one or more processors, wherein the memory includes one or more partitions and computer instructions which when executed by the one or more processors causes the one or more processors to perform operations via:
a user activity monitor (110) to collect (202) recent user-activity across two or more communication platforms (160, 170);
an App Service (127), communicatively coupled to said user activity monitor (110), to
store in a database (130) recent user-activity converted (204) into a vector format;
a generative Artificial Intelligence (AI) Applications Programming Interface (genAPI) (140) coupled to the App Service (127), a database (130) and an AI engine (141) to
generate (214) user-knowledge events from the recent user-activity in vector format, and
generate (210) random questions from said user-knowledge events combined from the two or more communication platforms (160, 170), wherein the random questions test the user's knowledge of their recent user-activity; and
a user authentication module (120) to
request said random questions from the genAPI (140);
present (208) the random questions to, and receive answers from, a user as part of an authentication step;
transmit (220) answered questions and the answers from the random questions to the genAPI (140),
wherein the genAPI (140) by way of the App Service (127) parses the answered questions, queries (222) the database (130) and AI Engine (141) for an expected answer to the answered questions, compares (224) the expected answer to the answers received from the user, and authenticates the user if the compare is within a probabilistic threshold,
wherein said step of collecting and processing only occurs responsive to obtaining user consent for compliance with security and privacy rules and regulations according to a questionnaire policy.

10. The system of claim 9, wherein one of the communication platforms (160, 170) is a professional workplace collaboration platform (160) and the other is a non-professional social media platform (170), wherein,
the professional workplace collaboration platform (160) is one among team messaging, team chat, project messaging, boarding program, and business communication tool providing integrated Identity, Access and Management (IAM), and
the non-professional social media platform (170) is one among a social media app, a social network, a discussion forum, a content-sharing network, a blog or community network, a shopping network, and a content-hosting network,

11. The system of claim 10, wherein recent user-activity:
on the non-professional social media platform (170), is identified from updates to social media profile, pictures, texts, chats, storyboard, or marketplace, and
on the professional workplace collaboration platform (160), is identified from user logs of an authentication server implementing a protocol from one among Kerberos, RADIUS, LDAP, OAuth2 or SAML for verifying an identify and authorizing the user,
wherein said step of generating user-knowledge events includes determining a recency of user activity in view of the user logs, and said step of generating questions retrieves user-knowledge events from recent user activities occurring only while the user is simultaneously logged into the two or more communication platforms

12. The system of claim 9, wherein the database (130) is a NoSQL database that stores JSON objects containing entries for question content in accordance with questionnaire policy and enforcement thereof, and a list of precompiled questions.

13. The system of claim 9, wherein the database (130) is a NoSQL database and said vector is formatted to additionally include
a first-time stamp establishing time and date of said capturing step for enforcing a recency of said recent user-activity based authentication; and
a second time stamp establishing time and date of content for enforcing a relevancy of random question content during said recency of said user-activity based authentication.
